(19) **Europäisches Patentamt European Patent Office Office européen des brevets**

(11) **EP 3 800 098 B1**

(12) **EUROPEAN PATENT SPECIFICATION**

(45) Date of publication and mention
of the grant of the patent:
**28.06.2023 Bulletin 2023/26**

(21) Application number: **19855404.0**

(22) Date of filing: **22.08.2019**

(51) International Patent Classification (IPC):
*B60W 20/40* (2016.01)   *B60W 10/10* (2012.01)
*B60W 10/11* (2012.01)   *B60K 6/543* (2007.10)
*B60K 6/48* (2007.10)   *B60K 6/387* (2007.10)
*B60W 10/02* (2006.01)   *B60W 20/50* (2016.01)
*B60W 30/18* (2012.01)   *B60W 50/032* (2012.01)
*B60W 50/02* (2012.01)   *B60W 50/029* (2012.01)
*B60W 50/035* (2012.01)   *B60L 15/20* (2006.01)
*B60L 50/16* (2019.01)   *F16H 61/12* (2010.01)
*B60K 6/547* (2007.10)   *B60W 10/06* (2006.01)
*B60W 10/08* (2006.01)

(52) Cooperative Patent Classification (CPC):
**B60K 6/387; B60K 6/48; B60L 15/20; B60L 50/16;**
**B60W 10/02; B60W 10/023; B60W 10/06;**
**B60W 10/08; B60W 20/40; B60W 20/50;**
**B60W 30/18072; B60W 50/0205; B60W 50/0225;**
**B60W 50/029; B60W 50/032;**                    (Cont.)

(86) International application number:
**PCT/JP2019/032789**

(87) International publication number:
**WO 2020/045217 (05.03.2020 Gazette 2020/10)**

(54) **CONTROL DEVICE FOR VEHICLE DRIVE DEVICE**

STEUERUNGSVORRICHTUNG FÜR EINE FAHRZEUGANTRIEBSVORRICHTUNG

DISPOSITIF DE COMMANDE POUR DISPOSITIF D'ENTRAÎNEMENT DE VÉHICULE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **31.08.2018   JP 2018162779**

(43) Date of publication of application:
**07.04.2021 Bulletin 2021/14**

(73) Proprietor: **AISIN CORPORATION**
**Aichi 448-8650 (JP)**

(72) Inventors:
• **HOSOI, Nobuhiro**
**Anjo-shi, Aichi 444-1192 (JP)**
• **SUGIMOTO, Daiki**
**Anjo-shi, Aichi 444-1192 (JP)**

(74) Representative: **TBK**
**Bavariaring 4-6**
**80336 München (DE)**

(56) References cited:
**WO-A1-2012/056862      WO-A1-2016/151657**
**JP-A- 2006 250 436      JP-A- 2010 286 095**
**JP-A- 2017 165 177      US-A1- 2018 050 680**
**US-A1- 2018 093 660      US-A1- 2018 111 605**

EP 3 800 098 B1

(52) Cooperative Patent Classification (CPC): (Cont.)
**B60W 50/035; F16H 61/12;** B60K 6/543;
B60K 6/547; B60K 2006/4825; B60W 10/10;
B60W 10/11; B60W 2050/021; B60W 2050/022;
B60W 2050/0292; B60W 2050/0295;
B60W 2050/0297; B60W 2510/0208;
B60W 2510/0638; B60W 2510/081;
B60W 2510/1015; B60W 2510/104; B60W 2520/10;
B60W 2520/105; B60W 2710/021;
B60W 2710/1005; Y02T 10/62; Y02T 10/72

**Description**

TECHNICAL FIELD

The present invention relates to a control device whose control target is a vehicle drive device in which in a power transmission path connecting an input member drive-coupled to an internal combustion engine to an output member drive-coupled to wheels, an engagement device that operates by hydraulic pressure, a rotating electrical machine, and a transmission are provided in this order from an internal combustion engine side.

BACKGROUND ART

An example of such a control device is disclosed in the following Patent Literature 1. In the following, in description of the Background Art section, reference signs in Patent Literature 1 are quoted in parentheses.

In a control device (30) of Patent Literature 1, an engagement control part (44) controls a state of engagement of an engagement device (CL1) based on an instruction from an instruction device (46). However, despite the fact that the engagement control part (44) receives from the instruction device (46) a disengagement instruction to bring the engagement device (CL1) into a disengaged state, a situation in which the engagement device (CL1) goes into an engaged state can occur due to a failure of the engagement control part (44), a computation error of the engagement control part (44), a failure of the engagement device (CL1), etc. Patent Literature 1 does not describe this matter, but when such a situation occurs in a state in which drive power of a rotating electrical machine (MG) is transmitted to wheels (e.g., EV mode), power is transmitted between an internal combustion engine (ENG) and the rotating electrical machine (MG), and thus, the rotational speed of the rotating electrical machine (MG) decreases by the inertia torque of the internal combustion engine (ENG) and there has been a possibility of unintended deceleration of a vehicle.

CITATIONS LIST

PATENT LITERATURE

Patent Literature 1: WO 2016/084474 A (FIG. 1)

Document US 2018/093660 A1 discloses a fail-safe control device is provided for hybrid vehicles which allows a travel distance of a vehicle to be extended in an event of an ON-failure of a second clutch. An integrated controller switches between an HEV mode and an EV mode by controlling a first clutch between an engine and a motor, and a second clutch between the motor and a continuously variable transmission. The integrated controller prohibits the transition from the HEV mode to the EV mode when a clutch failure determination unit detects an ON-failure of the second clutch while the vehicle is traveling in the HEV mode.

Document US 2018/111605 A1 discloses a device for controlling an engine clutch in an environmentally-friendly vehicle, wherein the engine clutch is disposed between an engine and a driving motor and is configured to selectively connect the engine to the driving motor, includes: a transmission configured to receive a driving force that is transmitted from at least one of the engine and the driving motor by release or engagement of the engine clutch; and a controller configured to control the engine clutch based on a gear of the transmission when the failure of the engine clutch is detected and configured to charge a battery using the engine.

SUMMARY OF INVENTION

TECHNICAL PROBLEMS

Hence, it is desired to implement a control device for a vehicle drive device that can determine unintended deceleration of a vehicle in a state in which drive power of a rotating electrical machine is transmitted to wheels.

SOLUTIONS TO PROBLEMS

According to an aspect of the present invention, there is provided a control device for a vehicle according to claim 1. Further aspects and features of the present invention are set out in the dependent claims.

A characteristic configuration of a control device for a vehicle drive device in view of the above description is such that
the control device is a control device whose control target is a vehicle drive device in which in a power transmission path connecting an input member drive-coupled to an internal combustion engine to an output member drive-coupled to wheels, a first engagement device that operates by hydraulic pressure, a rotating electrical machine, and a transmission are provided in this order from an internal combustion engine side, and the control device includes:

an engagement control part that controls a state of engagement of the first engagement device based on an engagement control instruction;
a hydraulic pressure information obtaining part that obtains hydraulic pressure information indicating first hydraulic pressure supplied to the first engagement device;
an acceleration information obtaining part that obtains acceleration information indicating acceleration of a vehicle on which the vehicle drive device is provided; and
a determining part that determines a state of the first engagement device, and
when
an input rotational speed is greater than zero and a state of the transmission is a drive transmission state in which drive power is transmitted, the input rotational speed being a rotational speed of the rotating electrical machine;
the engagement control instruction is a disengagement instruction to bring the first engagement device into a disengaged state;
the first hydraulic pressure indicated by the hydraulic pressure information is greater than a first threshold value; and
acceleration indicated by the acceleration information has a negative value smaller than a second threshold value,
the determining part performs at least one of first control that brings the first engagement device into a disengaged state and second control that interrupts transmission of drive power between the rotating electrical machine and the output member.

According to the characteristic configuration, when the first engagement device goes into an engaged state in contrast to a disengagement instruction during acceleration or deceleration of the vehicle or during coasting of the vehicle in a state in which drive power of the rotating electrical machine is transmitted to the wheels, and the acceleration of the vehicle becomes a negative value smaller than a specified value, at least one of interruption of power transmission between the internal combustion engine and the rotating electrical machine and interruption of power transmission between the rotating electrical machine and the output member is performed. Hence, unintended transmission of inertia torque of the internal combustion engine to the wheels caused by an engagement abnormality in the first engagement device can be avoided. Therefore, unintended deceleration of the vehicle in a state in which drive power of the rotating electrical machine is transmitted to the wheels can be avoided.

BRIEF DESCRIPTION OF DRAWINGS

FIG. 1 is a schematic diagram showing configurations of a vehicle drive device and a control device according to a first embodiment.
FIG. 2 is a block diagram showing a configuration of the control device according to the first embodiment.
FIG. 3 is a flowchart showing a determination of a state of a first engagement device by a determining part.
FIG. 4 is a time chart showing a determination of a state of the first engagement device by the determining part.
FIG. 5 is a schematic diagram showing configurations of a vehicle drive device and a control device according to a second embodiment.

DESCRIPTION OF EMBODIMENTS

[First Embodiment]

In the following, a control device 10 for a vehicle drive device 1 according to a first embodiment will be described with reference to drawings. The control device 10 is a device whose control target is the vehicle drive device 1. The control device 10 together with the vehicle drive device 1 is mounted on a vehicle. In the present embodiment, an internal combustion engine control device 20 is also mounted on the vehicle. The internal combustion engine control device 20 is a device that controls an internal combustion engine ENG serving as a drive power source.

1. Configuration of the vehicle drive device

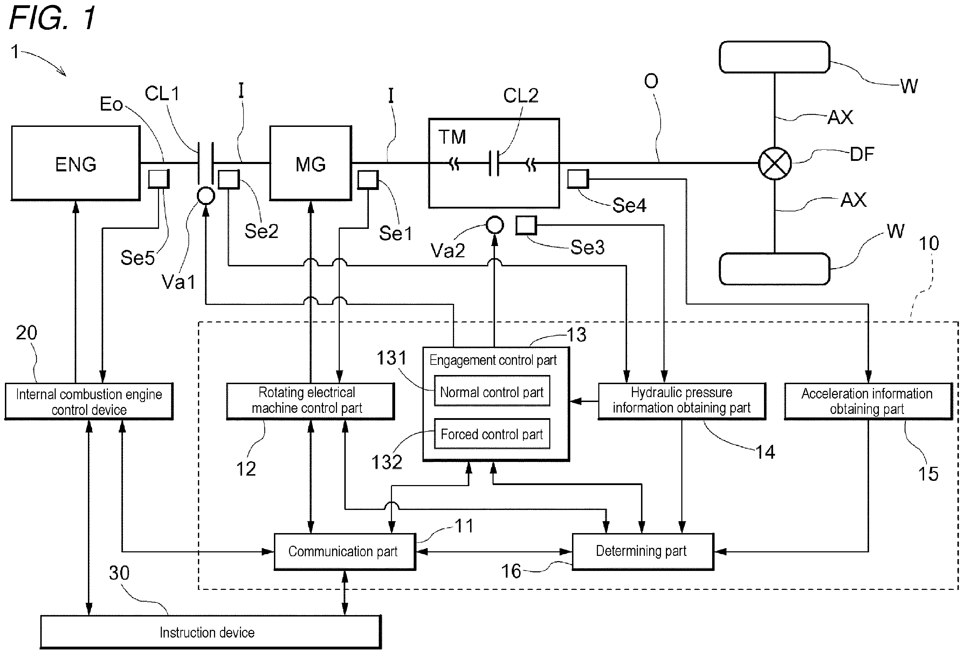

First, a configuration of the vehicle drive device 1 will be described. As shown in FIG. 1, the vehicle drive device 1 includes an input shaft I drive-coupled to the internal combustion engine ENG; an output shaft O drive-coupled to wheels W; a rotating electrical machine MG; a first engagement device CL1 that selectively drive-couples the internal combustion engine ENG to the rotating electrical machine MG; and a transmission TM that changes the speed of rotation of the input shaft I and transmits the rotation to the output shaft O. In a power transmission path connecting the input shaft I to the output shaft O, the first engagement device CL1, the rotating electrical machine MG, and the transmission TM are disposed in this order from an internal combustion engine ENG side. Note that in the present embodiment, the input shaft I corresponds to an "input member" and the output shaft O corresponds to an "output member".

Here, the term "drive-coupled" indicates a state in which two rotating elements are coupled together such that they can transmit drive power, and includes a state in which the two rotating elements are coupled together such that they rotate together or a state in which the two rotating elements are coupled together through one or two or more power transmission members such that they can transmit drive power. Such power transmission members include various types of members (e.g., shafts, gear mechanisms, belts, and chains) that transmit rotation at the same speed or at a changed speed. Note that the power transmission members may include engagement devices (e.g., friction engagement devices and mesh engagement devices) that selectively transmit rotation and drive power.

The internal combustion engine ENG is a prime mover (a gasoline engine, a diesel engine, etc.) that is driven by fuel combustion to take out power. In the present embodiment, an internal combustion engine output shaft Eo such as a crankshaft of the internal combustion engine ENG is selectively drive-coupled to the input shaft I through the first engagement device CL1. The internal combustion engine output shaft Eo is provided with a damper (depiction is omitted) that damps fluctuation of torque to be transmitted.

The rotating electrical machine MG includes a stator and a rotor that is rotatably supported on the stator. The rotor of the rotating electrical machine MG is drive-coupled to the input shaft I so as to rotate together with the input shaft I. That is, in the present embodiment, the configuration is such that both the internal combustion engine ENG and the rotating electrical machine MG are drive-coupled to the input shaft I. The rotating electrical machine MG is electrically connected to a battery (an example of an electrical storage device, the same applies hereinafter) through an inverter that performs DC-AC conversion. The rotating electrical machine MG has a function of a motor that receives electric power supply and thereby generates power and a function of a generator that receives power supply and thereby generates electric power. That is, the rotating electrical machine MG performs motoring by receiving electric power supply from the battery through the inverter, or stores electric power generated by torque of the internal combustion engine ENG or inertial force of the vehicle in the battery through the inverter.

The transmission TM includes one or more second engagement devices CL2 that are brought into an engaged state when a shift speed is formed. The transmission TM forms a shift speed determined based on the states of engagement of the second engagement devices CL2, changes the speed of rotation of the input shaft I at a gear ratio determined based on the shift speed, and transmits the rotation to the output shaft O. Torque transmitted from the transmission TM to the output shaft O is distributed to a plurality of (two in this example) axles AX through a differential gear device DF and transmitted to the wheels W drive-coupled to the respective axles AX.

The first engagement device CL1 and the second engagement devices CL2 each are an engagement device that operates by hydraulic pressure. In the present embodiment, the first engagement device CL1 and the second engagement devices CL2 each are a friction engagement device. The friction engagement device is configured such that the state of engagement is controlled based on hydraulic pressure supplied to the friction engagement device.

The friction engagement device transmits torque between a pair of fiction members included in the friction engagement device by friction between the pair of friction members. When there is a rotational speed difference (slippage) between the pair of friction members of the friction engagement device, torque (slip torque) whose magnitude is transmission torque capacity is transmitted by dynamic friction from a member with a higher rotational speed to a member with a lower rotational speed. When there is no rotational speed difference (slippage) between the pair of friction members of the friction engagement device, the friction engagement device transmits, by static friction, torque acting between the pair of friction members, with the magnitude of transmission torque capacity being an upper limit. Here, the transmission torque capacity is the magnitude of maximum torque that can be transmitted by the friction engagement device by friction. The magnitude of the transmission torque capacity changes in proportion to the engagement pressure of the friction engagement device. The engagement pressure is pressure that presses a friction member on an input side and a friction member on an output side against each other. The engagement pressure changes in proportion to the magnitude of supplied hydraulic pressure. That is, the magnitude of the transmission torque capacity changes in proportion to the magnitude of hydraulic pressure supplied to the friction engagement device.

The friction engagement device includes a return spring, and the friction members are biased toward a disengagement side by reaction force of the return spring. When force generated by hydraulic pressure supplied to a hydraulic cylinder of the friction engagement device exceeds the reaction force of the return spring, transmission torque capacity starts to be generated in the friction engagement device, by which the friction engagement device changes from a disengaged state to an engaged state. The hydraulic pressure at which transmission torque capacity starts to be generated is referred to as stroke end pressure. The friction engagement device is configured such that after supplied hydraulic pressure exceeds the stroke end pressure, the transmission torque capacity increases in proportion to an increase in the hydraulic pressure. Note that the friction engagement device may be structured such that the friction engagement device does not include a return spring and is controlled by differential pressure of hydraulic pressure applied to both sides of a piston of the hydraulic cylinder.

Here, the "engaged state" is a state in which transmission torque capacity is generated in the friction engagement device, and includes a slip-engaged state and a direct-coupling engaged state. The "slip-engaged state" is an engaged state in which there is a rotational speed difference (slippage) between the pair of friction members of the friction engagement device. The "direct-coupling engaged state" is an engaged state in which there is no rotational speed difference (slippage) between the pair of friction members of the friction engagement device. In addition, the "disengaged state" is a state in which transmission torque capacity is not generated in the friction engagement device.

2. Configurations of the control devices

Next, configurations of the control device 10 that controls the vehicle drive device 1 and the internal combustion engine control device 20 that controls the internal combustion engine ENG will be described.

The control device 10 and the internal combustion engine control device 20 each include, as a core member, an arithmetic processing device such as a CPU and include storage devices such as a random access memory (RAM) from which data can be read and into which data can be written by the arithmetic processing device and a read only memory (ROM) from which data can be read by the arithmetic processing device. Furthermore, the control device 10 and the internal combustion engine control device 20 each include software (programs) stored in the storage devices, hardware provided separately such as an arithmetic circuit, or both of them.

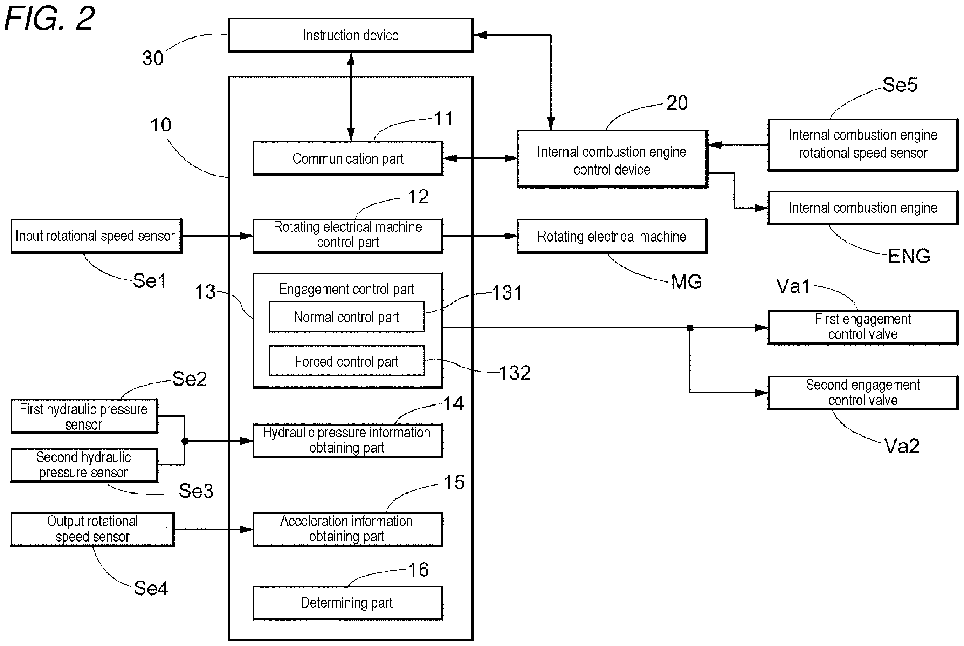

As shown in FIGS. 1 and 2, the control device 10 includes an engagement control part 13, a hydraulic pressure information obtaining part 14, an acceleration information obtaining part 15, and a determining part 16. In the present embodiment, the control device 10 also includes a communication part 11 and a rotating electrical machine control part 12.

The communication part 11 is configured to be able to communicate with an instruction device 30 which is a host control device for the control device 10 and the internal combustion engine control device 20. The communication part 11 receives from the instruction device 30 a rotating electrical machine control instruction which is an instruction for the rotating electrical machine control part 12, an engagement control instruction which is an instruction for the engagement control part 13, etc. In addition, the communication part 11 is configured to be able to communicate with the rotating electrical machine control part 12, the engagement control part 13, and the internal combustion engine control device 20, too. Note that the internal combustion engine control device 20 and the instruction device 30 may be included in the same device.

The rotating electrical machine control part 12 controls the rotating electrical machine MG. When target torque required for the rotating electrical machine MG is instructed by the instruction device 30 through the communication part 11, the rotating electrical machine control part 12 controls the rotating electrical machine MG to output the target torque. In addition, when a target rotational speed required for the rotating electrical machine MG is instructed by the instruction device 30 through the communication part 11, the rotating electrical machine control part 12 controls the rotating electrical machine MG to achieve the target rotational speed. Specifically, the rotating electrical machine control part 12 controls the output torque and rotational speed of the rotating electrical machine MG by controlling the inverter that drives the rotating electrical machine MG.

In addition, the rotating electrical machine control part 12 calculates an input rotational speed Nm which is the rotational speed (angular speed) of the input shaft I, based on an output signal from an input rotational speed sensor Se1. The input rotational speed sensor Se1 is a sensor for detecting the input rotational speed Nm. For the input rotational speed sensor Se1, a resolver, a sensor using a magnetoresistive element (MR element), a sensor using a Hall element, etc., can be adopted. Note that, as described above, since the rotor of the rotating electrical machine MG is integrally drive-coupled to the input shaft I, the rotational speed of the input shaft I corresponds to the rotational speed of the rotating electrical machine MG.

The engagement control part 13 controls the state of engagement of the first engagement device CL1 based on the above-described engagement control instruction. In the present embodiment, the engagement control part 13 controls a first engagement control valve Va1 such that first hydraulic pressure P1 supplied to the first engagement device CL1 matches target hydraulic pressure (hydraulic pressure instruction) of the first engagement device CL1 that is included in the engagement control instruction. In the present embodiment, the first engagement control valve Va1 is a solenoid valve that adjusts hydraulic pressure to be supplied to a hydraulic servomechanism of the first engagement device CL1, based on current applied thereto.

In addition, the engagement control part 13 controls the state of the transmission TM by controlling the states of engagement of the second engagement devices CL2 in the transmission TM. In the present embodiment, the engagement control part 13 controls second engagement control valves Va2 such that second hydraulic pressure P2 supplied to the second engagement devices CL2 matches target hydraulic pressure (hydraulic pressure instruction) of the second engagement devices CL2 instructed by the instruction device 30. In the present embodiment, the second engagement control valves Va2 are solenoid valves that adjust hydraulic pressure to be supplied to hydraulic servomechanisms of the second engagement devices CL2, based on current applied thereto. Note that in the present embodiment, the second engagement control valves Va2 are provided for the respective plurality of second engagement devices CL2. That is, the second engagement control valves Va2 whose number is the same as the number of the second engagement devices CL2 are provided. Note, however, that the number of the second engagement control valves Va2 may be smaller than the number of the second engagement devices CL2. In this case, an oil passage switching mechanism (oil passage switching valve) that switches the supply destination of hydraulic pressure between the plurality of second engagement devices CL2 (the plurality of hydraulic servomechanisms) is provided more on a downstream side than the second engagement control valve Va2.

The hydraulic pressure information obtaining part 14 obtains hydraulic pressure information indicating first hydraulic pressure P1 supplied to the first engagement device CL1. In the present embodiment, the hydraulic pressure information obtaining part 14 calculates first hydraulic pressure P1 based on an output signal from a first hydraulic pressure sensor Se2. The first hydraulic pressure sensor Se2 is a sensor for detecting first hydraulic pressure P1 supplied to the first engagement device CL1. The first hydraulic pressure sensor Se2 is provided, for example, in an oil passage connecting the first engagement control valve Va1 to the hydraulic servomechanism of the first engagement device CL1.

In addition, the hydraulic pressure information obtaining part 14 obtains hydraulic pressure information indicating second hydraulic pressure P2 supplied to the second engagement devices CL2. In the present embodiment, the hydraulic pressure information obtaining part 14 calculates second hydraulic pressure P2 based on an output signal from a second hydraulic pressure sensor Se3. The second hydraulic pressure sensor Se3 is a sensor for detecting second hydraulic pressure P2 supplied to the second engagement devices CL2. The second hydraulic pressure sensor Se3 is provided, for example, in an oil passage connecting the second engagement control valves Va2 to the hydraulic servomechanisms of the second engagement devices CL2.

The acceleration information obtaining part 15 obtains acceleration information indicating acceleration A of the vehicle having the vehicle drive device 1 provided thereon. In the present embodiment, the acceleration information obtaining part 15 calculates the rotational speed (angular speed) of the output shaft O based on an output signal from an output rotational speed sensor Se4. Then, the acceleration information obtaining part 15 calculates acceleration A of the vehicle based on a change in the rotational speed of the output shaft O. For the output rotational speed sensor Se4, a resolver, a sensor using a magnetoresistive element (MR element), a sensor using a Hall element, etc., can be adopted.

Note that the acceleration A of the vehicle can be calculated, for example, by the following equation.

Acceleration A of the vehicle = a change in the rotational speed of the output shaft O (the differential value of rotational speed of the output shaft O) × the circumference of the wheels W/the gear ratio of the differential gear device DF

The determining part 16 determines a state of the first engagement device CL1 based on hydraulic pressure information obtained by the hydraulic pressure information obtaining part 14, acceleration information obtained by the acceleration information obtaining part 15, etc. Specific operation of the determining part 16 will be described later.

When a combustion start request for the internal combustion engine ENG has been made, the internal combustion engine control device 20 performs control to start combustion of the internal combustion engine ENG, for example, by starting the fuel supply and ignition of the internal combustion engine ENG. In addition, when a combustion stop instruction for the internal combustion engine ENG has been made by the instruction device 30 through the communication part 11, the internal combustion engine control device 20 brings the internal combustion engine ENG into a combustion stop state by stopping the fuel supply, ignition, etc., of the internal combustion engine ENG. Furthermore, the internal combustion engine control device 20 controls the internal combustion engine ENG to output target torque instructed by the instruction device 30 through the communication part 11 or to achieve a target rotational speed instructed by the instruction device 30 through the communication part 11.

In addition, the internal combustion engine control device 20 calculates an internal combustion engine rotational speed Ne which is the rotational speed (angular speed) of the internal combustion engine output shaft Eo (internal combustion engine ENG), based on an output signal from an internal combustion engine rotational speed sensor Se5. The internal combustion engine rotational speed sensor Se5 is a sensor for detecting the internal combustion engine rotational speed Ne. For the internal combustion engine rotational speed sensor Se5, a resolver, a sensor using a magnetoresistive element (MR element), a sensor using a Hall element, etc., can be adopted.

3. Determination of a state of the first engagement device CL1

Next, a determination of a state of the first engagement device CL1 by the determining part 16 will be described.

The determining part 16 determines that the state of the first engagement device CL1 is an engagement abnormality where the state of the first engagement device CL1 is an engaged state in contrast to a disengagement instruction, when the following conditions (a) to (e) are all satisfied:

(a) The input rotational speed Nm which is the rotational speed of the rotating electrical machine MG (input shaft I) is greater than zero;

(b) The state of the transmission TM is a drive transmission state in which drive power is transmitted;

(c) The engagement control instruction is a disengagement instruction to bring the first engagement device CL1 into a disengaged state;

(d) The first hydraulic pressure P1 is greater than a first threshold value TH1; and

(e) The acceleration A of the vehicle has a negative value smaller than a second threshold value TH2.

In the present embodiment, when the determining part 16 determines that the state of the first engagement device CL1 is an engagement abnormality, the determining part 16 performs at least one of first control that brings the first engagement device CL1 into a disengaged state and second control that interrupts transmission of drive power between the rotating electrical machine MG and the output shaft O.

In the present embodiment, the first control includes first disengagement control that allows the engagement control part 13 to perform control again to bring the first engagement device CL1 into a disengaged state; second disengagement control that allows the first engagement control valve Va1 to operate such that the first engagement device CL1 is forcefully brought into a disengaged state; and third disengagement control that allows the engagement control part 13 to restart.

In the present embodiment, the second control includes neutral control that brings the state of the transmission TM into a neutral state in which drive power is not transmitted. The neutral control includes normal neutral control that brings the transmission TM into a neutral state in normal control that allows the engagement control part 13 to control the states of engagement of the second engagement devices CL2 in the transmission TM; and forced neutral control that allows the second engagement control valves Va2 to operate such that the second engagement devices CL2 are forcefully brought into a disengaged state.

In the present embodiment, the engagement control part 13 includes a normal control part 131 and a forced control part 132. The normal control part 131 controls the state of engagement of each of the first engagement device CL1 and the second engagement devices CL2 mainly at normal times, based on an engagement control instruction, etc. The forced control part 132 forcefully controls the state of engagement of each of the first engagement device CL1 and the second engagement devices CL2 when it is determined that the state of the first engagement device CL1 is an engagement abnormality.

In the present embodiment, in the first disengagement control, the determining part 16 controls the normal control part 131 to bring the first engagement device CL1 into a disengaged state. In addition, in the second disengagement control, the determining part 16 controls the forced control part 132 to allow the first engagement control valve Va1 to operate such that the first engagement device CL1 is forcefully brought into a disengaged state. The forced control part 132 forcefully brings the first engagement device CL1 into a disengaged state, for example, by stopping supply of current to the first engagement control valve Va1. Note that the determining part 16 may be configured to control both the normal control part 131 and the forced control part 132 in the second disengagement control such that the first engagement device CL1 is brought into a disengaged state. By this, the first engagement device CL1 can be brought into a disengaged state with high reliability.

Furthermore, in the present embodiment, in the normal neutral control, the determining part 16 controls the normal control part 131 to bring the transmission TM into a neutral state. In addition, in the forced neutral control, the determining part 16 controls the forced control part 132 to allow the second engagement control valves Va2 to operate such that the second engagement devices CL2 are forcefully brought into a disengaged state. The forced control part 132 forcefully brings all of the second engagement devices CL2 into a disengaged state, for example, by stopping supply of current to all of the second engagement control valves Va2. Note that the determining part 16 may be configured to control both the normal control part 131 and the forced control part 132 in the forced neutral control such that the second engagement devices CL2 are brought into a disengaged state. By this, the second engagement devices CL2 can be brought into a disengaged state with high reliability.

In the present embodiment, the determining part 16 determines a state of the first engagement device CL1 when the input rotational speed Nm is higher than the internal combustion engine rotational speed Ne and a rotational speed difference ΔN between the input rotational speed Nm and the internal combustion engine rotational speed Ne is greater than a third threshold value TH3, and does not determine a state of the first engagement device CL1 when the rotational speed difference ΔN between the input rotational speed Nm and the internal combustion engine rotational speed Ne is less than or equal to the third threshold value TH3.

3-1. Flowchart

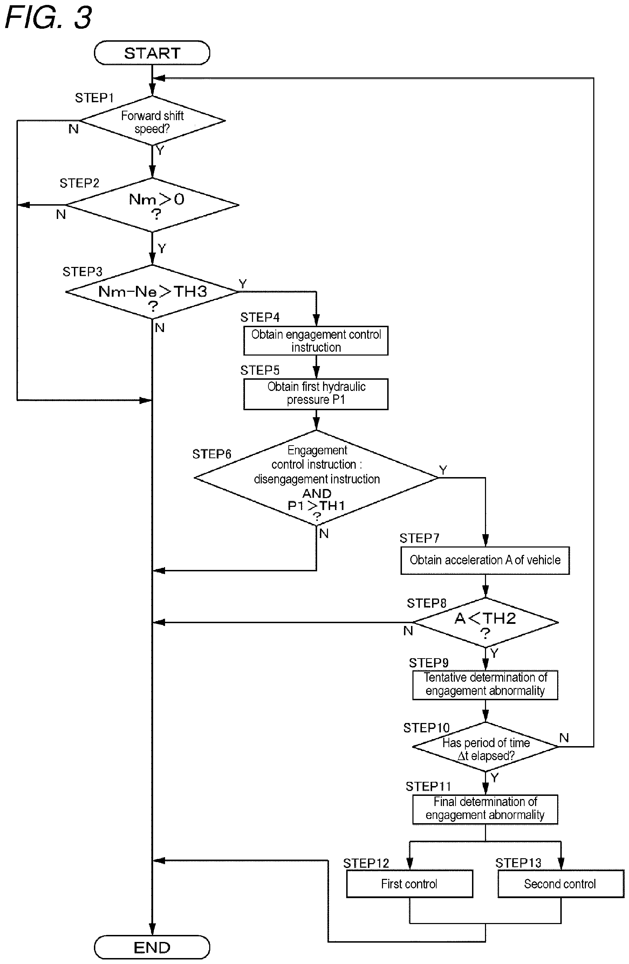

FIG. 3 shows a flowchart for an example of a determination of a state of the first engagement device CL1 by the determining part 16. As shown in FIG. 3, first, the determining part 16 determines whether the transmission TM has formed a forward shift speed (STEP1). This determination can be made, for example, based on second hydraulic pressure P2 supplied to the second engagement devices CL2 in the transmission TM that is calculated by the hydraulic pressure information obtaining part 14. Note that in the present application, a state in which the transmission TM has formed a forward shift speed corresponds to a "drive transmission state in which drive power is transmitted". Here, the forward shift speed is a shift speed at which drive power for allowing the vehicle to travel forward is transmitted to the wheels W.

If the determining part 16 determines that the transmission TM has formed a forward shift speed, the determining part 16 determines whether the input rotational speed Nm is greater than zero (STEP2). This determination can be made, for example, based on information from the rotating electrical machine control part 12.

On the other hand, if the determining part 16 determines that the transmission TM has not formed a forward shift speed, the determining part 16 ends the determination of a state of the first engagement device CL1.

If the determining part 16 determines that the input rotational speed Nm is greater than zero, the determining part 16 determines whether the input rotational speed Nm is higher than the internal combustion engine rotational speed Ne and the rotational speed difference $\Delta N$ between the input rotational speed Nm and the internal combustion engine rotational speed Ne is greater than the third threshold value TH3 (STEP3). This determination can be made, for example, based on information from the rotating electrical machine control part 12 and the internal combustion engine control device 20. The third threshold value TH3 is a positive value determined in advance by experiment, etc.

On the other hand, if the determining part 16 determines that the input rotational speed Nm is less than or equal to zero, the determining part 16 ends the determination of a state of the first engagement device CL1.

If the determining part 16 determines that the rotational speed difference $\Delta N$ between the input rotational speed Nm and the internal combustion engine rotational speed Ne is greater than the third threshold value TH3, the determining part 16 obtains from the communication part 11 an engagement control instruction which is received by the communication part 11 from the instruction device 30 (STEP4).

On the other hand, if the determining part 16 determines that the rotational speed difference $\Delta N$ between the input rotational speed Nm and the internal combustion engine rotational speed Ne is less than or equal to the third threshold value TH3, the determining part 16 ends the determination of a state of the first engagement device CL1.

After STEP4, the determining part 16 obtains first hydraulic pressure P1 calculated by the hydraulic pressure information obtaining part 14 (STEPS).

Then, the determining part 16 determines whether the engagement control instruction is a disengagement instruction to bring the first engagement device CL1 into a disengaged state and the first hydraulic pressure P1 is greater than the first threshold value TH1 (STEP6). The first threshold value TH1 is a threshold value for determining whether the first engagement device CL1 is in an engaged state, and when the first hydraulic pressure P1 is greater than the first threshold value TH1, it is determined that the first engagement device CL1 is in an engaged state.

If the determining part 16 determines that the engagement control instruction is a disengagement instruction to bring the first engagement device CL1 into a disengaged state and the first hydraulic pressure P1 is greater than the first threshold value TH1, the determining part 16 obtains acceleration A of the vehicle calculated by the acceleration information obtaining part 15 (STEP7).

On the other hand, if the determining part 16 determines that the engagement control instruction is not a disengagement instruction to bring the first engagement device CL1 into a disengaged state, or the first hydraulic pressure P1 is less than or equal to the first threshold value TH1, the determining part 16 ends the determination of a state of the first engagement device CL1.

After STEP7, the determining part 16 determines whether the acceleration A of the vehicle has a negative value smaller than the second threshold value TH2 (STEP8). The second threshold value TH2 can be set, for example, based on the following equation:

$$\text{Second threshold value TH2} = \text{a negative torque at which sudden deceleration}$$

$$\text{occurs/the circumference of the wheels W/the weight of the vehicle}$$

Here, the negative torque at which sudden deceleration occurs is a negative torque (e.g., -1000 N·m) assumed to cause sudden deceleration in the vehicle that should be avoided.

If the determining part 16 determines that the acceleration A of the vehicle has a negative value smaller than the second threshold value TH2, the determining part 16 makes a tentative determination that the state of the first engagement device CL1 is an engagement abnormality (hereinafter, referred to as "tentative determination of an engagement abnormality") (STEP9).

On the other hand, if the determining part 16 determines that the acceleration A of the vehicle is greater than or equal to the second threshold value TH2, the determining part 16 ends the determination of a state of the first engagement device CL1.

Subsequently, the determining part 16 determines whether a period of time $\Delta t$ has elapsed from when the tentative determination of an engagement abnormality is initially made (STEP10). If the period of time $\Delta t$ has not elapsed

from when the tentative determination of an engagement abnormality is initially made, the determining part 16 makes a determination of a state of the first engagement device CL1 all over again. On the other hand, if the period of time Δt has elapsed from when the tentative determination of an engagement abnormality is initially made, the determining part 16 makes a final determination that the state of the first engagement device CL1 is an engagement abnormality (hereinafter, referred to as "final determination of an engagement abnormality") (STEP11).

After making the final determination of an engagement abnormality, the determining part 16 performs first control that brings the first engagement device CL1 into a disengaged state (STEP12). Here, the determining part 16 performs, as the first control, first disengagement control that allows the engagement control part 13 to perform control again to bring the first engagement device CL1 into a disengaged state, and when the first engagement device CL1 has not been able to be brought into a disengaged state by the first disengagement control, the determining part 16 performs second disengagement control that allows the first engagement control valve Va1 to operate such that the first engagement device CL1 is forcefully brought into a disengaged state. Furthermore, when the first engagement device CL1 has not been able to be brought into a disengaged state by the second disengagement control, third disengagement control that allows the engagement control part 13 to restart is performed. Note that the determining part 16 may be configured to perform those controls in a different order than that described above, or may be configured to perform any one or two of those controls.

In addition, in parallel with the above-described first control, the determining part 16 performs second control that interrupts transmission of drive power between the rotating electrical machine MG and the output shaft O (STEP13). Here, the determining part 16 performs, as the second control, normal neutral control that brings the transmission TM into a neutral state in normal control that allows the engagement control part 13 to control the states of engagement of the second engagement devices CL2 in the transmission TM, and when the transmission TM has not been able to be brought into a neutral state by the normal neutral control, the determining part 16 performs forced neutral control that allows the second engagement control valves Va2 to operate such that the second engagement devices CL2 are forcefully brought into a disengaged state.

3-2. Time chart

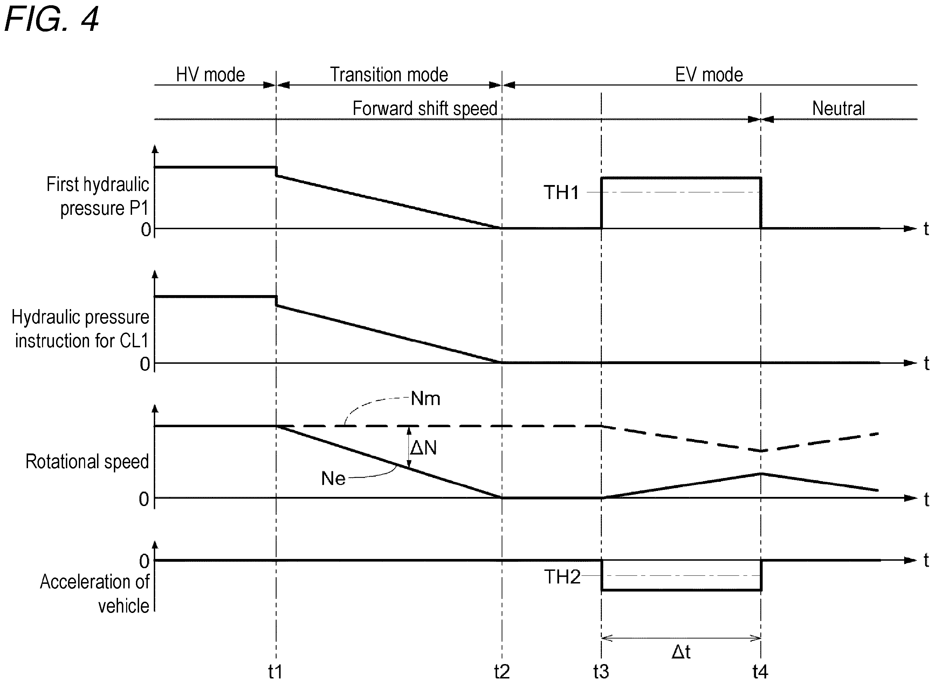

FIG. 4 shows a time chart for an example of a determination of a state of the first engagement device CL1 by the determining part 16. FIG. 4 shows a determination of a state of the first engagement device CL1 by the determining part 16 when it is determined that the first engagement device CL1 has an engagement abnormality during traveling of the vehicle at a constant speed with a forward shift speed formed by the transmission TM.

As shown in FIG. 4, the vehicle is controlled in HV mode until time t1. The HV mode is a mode in which the vehicle travels by drive power of both the internal combustion engine ENG and the rotating electrical machine MG, with the first engagement device CL1 being in a direct-coupling engaged state.

Then, the vehicle goes through a transition mode from time t1 to t2, and is then controlled in EV mode from time t2. The transition mode is a mode performed along the way of transitioning from the HV mode to the EV mode. The EV mode is a mode in which the vehicle travels by drive power of the rotating electrical machine MG without using drive power of the internal combustion engine ENG, with the first engagement device CL1 being in a disengaged state.

At time t1, in order to end the HV mode, a hydraulic pressure instruction for the first engagement device CL1 is reduced. Then, in order to achieve zero at time t2, the hydraulic pressure instruction for the first engagement device CL1 is gradually reduced. Accordingly, first hydraulic pressure P1 supplied to the first engagement device CL1 also gradually decreases over a period from time t1 to t2 and reaches zero at time t2. Note that in practice, delay in response of the first hydraulic pressure P1 to the hydraulic pressure instruction for the first engagement device CL1 occurs, but for convenience of description, it is assumed that there is no such delay in response.

In addition, at time t1, in order to end the HV mode, the internal combustion engine control device 20 brings the internal combustion engine ENG into a combustion stop state. As described above, since the first hydraulic pressure P1 gradually decreases over the period from time t1 to t2, the engagement pressure of the first engagement device CL1 also gradually decreases and reaches zero at time t2. That is, at time t2, the first engagement device CL1 goes into a disengaged state. Hence, the internal combustion engine rotational speed Ne gradually decreases and reaches zero at time t2. In other words, the rotational speed difference ΔN between the input rotational speed Nm and the internal combustion engine rotational speed Ne, which is zero at time t1 gradually increases over the period from time t1 to t2, and becomes maximum at time t2. Note that here it is assumed that the rotating electrical machine MG outputs a positive torque so that the input rotational speed Nm is maintained constant.

At time t2, along with the first hydraulic pressure P1 reaching zero, the first engagement device CL1 goes into a disengaged state and the EV mode starts. The input rotational speed Nm is maintained constant over a period from time t2 to t3, too, and the vehicle travels forward at a constant speed.

In such a state, at time t3, a situation in which the first hydraulic pressure P1 increases to a level where the first engagement device CL1 goes into an engaged state (the first hydraulic pressure P1 exceeds the first threshold value TH1) occurs in contrast to the hydraulic pressure instruction outputted from the instruction device 30. Such a situation, though the chance is very little, is likely to occur due to a failure of the engagement control part 13, a computation error of the engagement control part 13, a failure of the first engagement device CL1, etc.

Along with the first engagement device CL1 going into an engaged state, the input rotational speed Nm which is the rotational speed of the rotating electrical machine MG decreases by the inertia torque of the internal combustion engine ENG with the internal combustion engine rotational speed Ne being zero. On the other hand, the internal combustion engine rotational speed Ne increases. As a result, the vehicle decelerates to the extent that the acceleration A of the vehicle reaches a negative value smaller than the second threshold value TH2. Note that here it is assumed that the rotational speed difference ΔN between the input rotational speed Nm and the internal combustion engine rotational speed Ne is greater than the third threshold value TH3 over a period from time t3 to t4.

At time t3, the above-described tentative determination of an engagement abnormality is made. Then, at a point in time (time t4) when the period of time Δt has elapsed without resolving the tentative determination of an engagement abnormality before the period of time Δt has elapsed from when the tentative determination of an engagement abnormality is initially made, the above-described final determination of an engagement abnormality is made.

At time t4, the above-described first control and second control are performed. By the first control, the first hydraulic pressure P1 reaches zero and the first engagement device CL1 goes into a disengaged state. Accordingly, the input rotational speed Nm gradually increases and the internal combustion engine rotational speed Ne gradually decreases toward zero. In addition, by the second control, a state in which transmission of drive power between the rotating electrical machine MG and the output shaft O is interrupted is obtained. Here, by neutral control which is the second control, the state of the transmission TM goes into a neutral state in which drive power is not transmitted. Note that since traveling of the vehicle cannot be continued when the transmission TM is in the neutral state, it is preferred to perform control such that when traveling of the vehicle becomes stable after the neutral control, the state is brought back to an original drive transmission state (a state in which a forward shift speed is formed) in the shortest possible time.

[Second Embodiment]

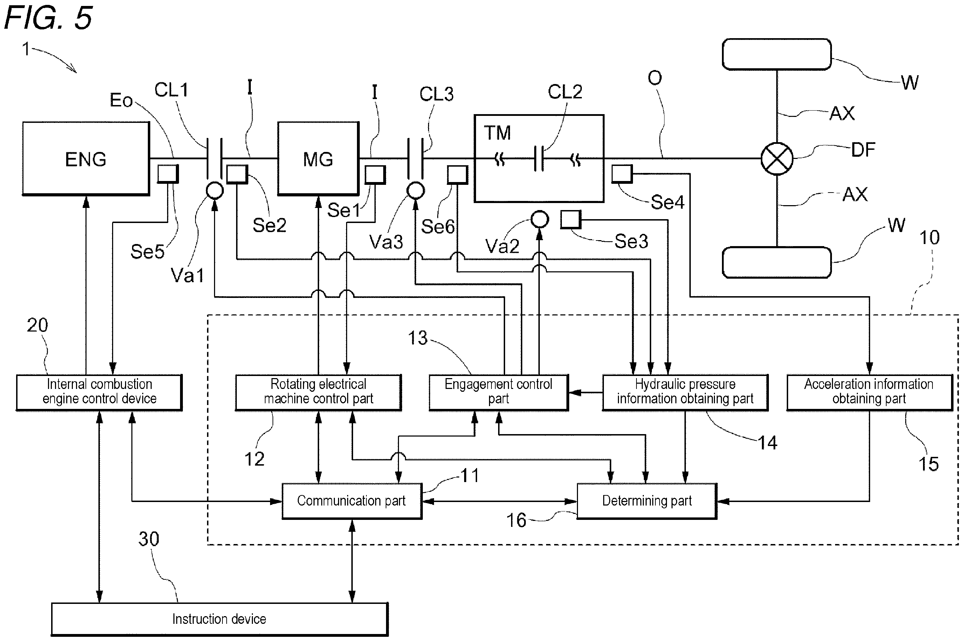

In the following, a control device 10 for a vehicle drive device 1 according to a second embodiment will be described with reference to FIG. 5. The present embodiment differs from the above-described first embodiment in that the vehicle drive device 1 includes a third engagement device CL3. In the following, differences from the above-described first embodiment will be mainly described. Note that points that are not particularly described are the same as those of the above-described first embodiment.

As shown in FIG. 5, in the present embodiment, the vehicle drive device 1 further includes the third engagement device CL3 that connects or disconnects transmission of drive power between the rotating electrical machine MG and the transmission TM. The third engagement device CL3 is an engagement device that operates by hydraulic pressure as with the first engagement device CL1 and the second engagement devices CL2. In the present embodiment, the third engagement device CL3 is a friction engagement device as with the first engagement device CL1 and the second engagement devices CL2.

In the present embodiment, the engagement control part 13 controls the state of engagement of the third engagement device CL3. In the present embodiment, the engagement control part 13 controls a third engagement control valve Va3 such that third hydraulic pressure P3 supplied to the third engagement device CL3 matches target hydraulic pressure (hydraulic pressure instruction) of the third engagement device CL3 instructed by the instruction device 30. In the present embodiment, the third engagement control valve Va3 is a solenoid valve that adjusts hydraulic pressure to be supplied to a hydraulic servomechanism of the third engagement device CL3, based on current applied thereto.

In the present embodiment, the hydraulic pressure information obtaining part 14 obtains hydraulic pressure information indicating third hydraulic pressure P3 supplied to the third engagement device CL3. In this example, the hydraulic pressure information obtaining part 14 calculates third hydraulic pressure P3 based on an output signal from a third hydraulic pressure sensor Se6. The third hydraulic pressure sensor Se6 is a sensor for detecting third hydraulic pressure P3 supplied to the third engagement device CL3. The third hydraulic pressure sensor Se6 is provided, for example, in an oil passage connecting the third engagement control valve Va3 to the hydraulic servomechanism of the third engagement device CL3.

In the present embodiment, the second control performed by the determining part 16 includes engagement disengagement control that brings the third engagement device CL3 into a disengaged state. The engagement disengagement control includes normal engagement disengagement control that brings the third engagement device CL3 into a disengaged state in normal control that allows the engagement control part 13 to control the state of engagement of the third engagement device CL3; and forced engagement disengagement control that allows the third engagement control valve Va3 to operate such that the third engagement device CL3 is forcefully brought into a disengaged state.

In the present embodiment, in the normal engagement disengagement control, the determining part 16 controls the normal control part 131 in the engagement control part 13 to bring the third engagement device CL3 into a disengaged state. In addition, in the forced engagement disengagement control, the determining part 16 controls the forced control part 132 in the engagement control part 13 to allow the third engagement control valve Va3 to operate such that the third engagement device CL3 is forcefully brought into a disengaged state. The forced control part 132 forcefully brings the third engagement device CL3 into a disengaged state, for example, by stopping supply of current to the third engagement control valve Va3. Note that the determining part 16 may be configured to control both the normal control part 131 and the forced control part 132 in the forced engagement disengagement control such that the third engagement device CL3 is brought into a disengaged state. By this, the third engagement device CL3 can be brought into a disengaged state with high reliability.

In the present embodiment, the determining part 16 performs, as the second control, at least one of the neutral control and the engagement disengagement control.

[Other Embodiments]

(1) The above-described embodiments describe, as an example, a configuration in which the acceleration A of the vehicle is calculated based on a change in the rotational speed of the output shaft O (the differential value of rotational speed of the output shaft O). However, the configuration is not limited thereto and may be such that the acceleration A of the vehicle is detected by an acceleration sensor.

(2) The above-described embodiments describe, as an example, a configuration in which a determination of a state of the first engagement device CL1 is made during traveling of the vehicle, with the rotating electrical machine MG outputting a positive torque. However, the configuration is not limited thereto and may be such that a determination of a state of the first engagement device CL1 is made when the vehicle is coasting without the rotating electrical machine MG outputting torque or when the vehicle is decelerating by the rotating electrical machine MG outputting a negative torque.

(3) The above-described embodiments describe, as an example, a configuration in which a determination of a state of the first engagement device CL1 is not made when the rotational speed difference $\Delta N$ between the input rotational speed Nm and the internal combustion engine rotational speed Ne is less than or equal to the third threshold value TH3. However, the configuration is not limited thereto and may be such that a determination of a state of the first engagement device CL1 is made whatever the value of the rotational speed difference $\Delta N$.

(4) The above-described embodiments describe, as an example, a configuration in which a final determination of an engagement abnormality is made when the period of time $\Delta t$ has elapsed from when a tentative determination of an engagement abnormality is initially made. However, the configuration is not limited thereto and may be such that a final determination of an engagement abnormality is made without making a tentative determination of an engagement abnormality.

(5) The above-described embodiments describe, as an example, a configuration in which the transmission TM is a stepped transmission having a shift speed determined based on the states of engagement of the second engagement devices CL2. However, the configuration is not limited thereto and the transmission TM may be a continuously variable transmission. In this case, engagement devices that switch between forward, reverse, and neutral states correspond to the second engagement devices CL2.

(6) The above-described embodiments describe, as an example, a configuration in which when the determining part 16 determines that the state of the first engagement device CL1 is an engagement abnormality, the determining part 16 performs both the first control and the second control. However, the configuration is not limited thereto and may be such that only either one of the first control and the second control is performed. Alternatively, the configuration may be such that control other than the first control and the second control is performed. For example, when the determining part 16 determines that the state of the first engagement device CL1 is an engagement abnormality, the determining part 16 may control the internal combustion engine control device 20 to allow the internal combustion engine ENG to start. According to this configuration, even when the first engagement device CL1 unintentionally goes into an engaged state, deceleration of the vehicle can be avoided.

(7) The above-described embodiments describe, as an example, a configuration in which in the time chart showing a determination of a state of the first engagement device CL1 by the determining part 16, the input rotational speed Nm gradually increases at and after time t4. However, the configuration is not limited thereto, and depending on the control state of the rotating electrical machine MG, at and after time t4, the input rotational speed Nm may gradually decrease or may be maintained constant.

(8) The above-described embodiments describe, as an example, a configuration in which the communication part 11 receives an instruction such as an engagement control instruction from the instruction device 30 by performing communication with the instruction device 30. However, the configuration is not limited thereto and may be such that a part of the control device 10 (e.g., the communication part 11) outputs an instruction such as an engagement control instruction.

(9) Note that a configuration described in each of the above-described embodiments can also be applied in combination with a configuration described in another embodiment as long as a contradiction does not arise. For other configurations, too, the embodiments described in this specification are in all respects merely illustrative. Thus, various modifications can be made therein as appropriate without departing from the scope of the present invention, as defined in the appended claims.

[Summary of the Above-Described Embodiments]

A summary of a control device (10) for a vehicle drive device (1) described above will be described below.

A control device (10) for a vehicle drive device (1) is the control device (10) whose control target is the vehicle drive device (1) in which in a power transmission path connecting an input member (I) drive-coupled to an internal combustion engine (ENG) to an output member (O) drive-coupled to wheels (W), a first engagement device (CL1) that operates by hydraulic pressure, a rotating electrical machine (MG), and a transmission (TM) are provided in this order from an internal combustion engine (ENG) side, the control device (10) including:

an engagement control part (13) that controls a state of engagement of the first engagement device (CL1) based on an engagement control instruction;
a hydraulic pressure information obtaining part (14) that obtains hydraulic pressure information indicating first hydraulic pressure (P1) supplied to the first engagement device (CL1);
an acceleration information obtaining part (15) that obtains acceleration information indicating acceleration (A) of a vehicle on which the vehicle drive device (1) is provided; and
a determining part (16) that determines a state of the first engagement device (CL1), and when
an input rotational speed (Nm) is greater than zero and a state of the transmission (TM) is a drive transmission state in which drive power is transmitted, the input rotational speed (Nm) being a rotational speed of the rotating electrical machine (MG);
the engagement control instruction is a disengagement instruction to bring the first engagement device (CL1) into a disengaged state;
the first hydraulic pressure (P1) indicated by the hydraulic pressure information is greater than a first threshold value (TH1); and
acceleration (A) indicated by the acceleration information has a negative value smaller than a second threshold value (TH2),
the determining part (16) performs at least one of first control that brings the first engagement device (CL1) into a disengaged state and second control that interrupts transmission of drive power between a rotating electrical machine (MG) and an output member (O).

According to this configuration, when the first engagement device (CL1) goes into an engaged state in contrast to a disengagement instruction and the acceleration (A) of the vehicle becomes a negative value smaller than a specified value during acceleration or deceleration of the vehicle or during coasting of the vehicle in a state in which drive power of the rotating electrical machine (MG) is transmitted to the wheels (W), at least one of interruption of power transmission between the internal combustion engine (ENG) and the rotating electrical machine (MG) and interruption of power transmission between the rotating electrical machine (MG) and the output member (O) is performed. Hence, unintended transmission of inertia torque of the internal combustion engine (ENG) to the wheels (W) caused by an engagement abnormality in the first engagement device (CL1) can be avoided. Therefore, unintended deceleration of the vehicle in a state in which drive power of the rotating electrical machine (MG) is transmitted to the wheels (W) can be avoided.

Here, it is preferred that the first control include first disengagement control that allows the engagement control part (13) to perform control again to bring the first engagement device (CL1) into a disengaged state.

Depending on the cause of an engagement abnormality in the first engagement device (CL1), the engagement abnormality in the first engagement device (CL1) may be resolved only by allowing the engagement control part (13) to perform control again to bring the first engagement device (CL1) into a disengaged state. According to this configuration, the engagement control part (13) is allowed to perform control again to bring the first engagement device (CL1) into a disengaged state, and thus, depending on the cause of an engagement abnormality in the first engagement device (CL1), the engagement abnormality in the first engagement device (CL1) can be resolved while the level of influence on a vehicle travel state is minimized.

In addition, it is preferred that the first control include second disengagement control that allows a first engagement control valve (Va1) to operate such that the first engagement device (CL1) is forcefully brought into a disengaged state, the first engagement control valve (Va1) controlling the first hydraulic pressure (P1) supplied to the first engagement device (CL1).

According to this configuration, even when an engagement abnormality in the first engagement device (CL1) cannot be resolved by the engagement control part (13) performing control to bring the first engagement device (CL1) into a disengaged state, the first engagement device (CL1) can be forcefully brought into a disengaged state by controlling first hydraulic pressure (P1) supplied to the first engagement device (CL1). Therefore, the engagement abnormality in the first engagement device (CL1) can be resolved with high reliability.

In addition, it is preferred that the first control include third disengagement control that allows the engagement control part (13) to restart.

When the cause of an engagement abnormality in the first engagement device (CL1) results from the state of the engagement control part (13), e.g., a computation error of the engagement control part (13), the engagement abnormality in the first engagement device (CL1) may be resolved only by restarting the engagement control part (13). According to this configuration, since the engagement control part (13) is restarted as the first control, when the cause of an engagement abnormality in the first engagement device (CL1) results from the state of the engagement control part (13), the engagement abnormality in the first engagement device (CL1) can be appropriately resolved.

In addition, it is preferred that the second control include neutral control that brings the state of the transmission (TM) into a neutral state in which drive power is not transmitted.

According to this configuration, only by bringing the state of the transmission (TM) into a neutral state, power transmission between the rotating electrical machine (MG) and the output member (O) can be interrupted. Thus, the second control can be easily performed.

In a configuration in which the second control includes the neutral control,

it is preferred that

the transmission (TM) include one or more second engagement devices (CL2) that are brought into an engaged state when a shift speed is formed, and
the neutral control include forced neutral control that allows a second engagement control valve (Va2) to operate such that the second engagement devices (CL2) are forcefully brought into a disengaged state, the second engagement control valve (Va2) controlling second hydraulic pressure (P2) supplied to the second engagement devices (CL2).

According to this configuration, as the neutral control, the second engagement control valve (Va2) is allowed to operate such that the second engagement devices (CL2) are forcefully brought into a disengaged state, and thus, the transmission (TM) can be brought into a neutral state with high reliability. By this, even when an engagement abnormality in the first engagement device (CL1) occurs, unintended transmission of inertia torque of the internal combustion engine (ENG) to the wheels (W) can be avoided. Therefore, unintended deceleration of the vehicle in a state in which drive power of the rotating electrical machine (MG) is transmitted to the wheels (W) can be avoided.

In addition, it is preferred that

the control device (10) further include a third engagement device (CL3) that connects or disconnects transmission of drive power between the rotating electrical machine (MG) and the transmission (TM), and
the second control include engagement disengagement control that brings the third engagement device (CL3) into a disengaged state.

According to this configuration, only by bringing the third engagement device (CL3) into a disengaged state, power transmission between the rotating electrical machine (MG) and the output member (O) can be interrupted. Thus, the second control can be easily performed.

In a configuration in which the second control includes the engagement disengagement control, it is preferred that the engagement disengagement control include forced engagement disengagement control that allows a third engagement control valve (Va3) to operate such that the third engagement device (CL3) is forcefully brought into a disengaged state, the third engagement control valve (Va3) controlling third hydraulic pressure (P3) supplied to the third engagement device (CL3).

According to this configuration, as the engagement disengagement control, the third engagement control valve (Va3) is allowed to operate such that the third engagement device (CL3) is forcefully brought into a disengaged state, and thus, the third engagement device (CL3) can be brought into a disengaged state with high reliability. By this, even when an engagement abnormality in the first engagement device (CL1) occurs, unintended transmission of inertia torque of the internal combustion engine (ENG) to the wheels (W) can be avoided. Therefore, unintended deceleration of the vehicle in a state in which drive power of the rotating electrical machine (MG) is transmitted to the wheels (W) can be avoided.

In addition, it is preferred that the determining part (16)

determine a state of the first engagement device (CL1) by the determining part (16) when the input rotational speed (Nm) is higher than an internal combustion engine rotational speed (Ne) and a difference (ΔN) between the input rotational speed (Nm) and the internal combustion engine rotational speed (Ne) is greater than a third threshold value (TH3), the internal combustion engine rotational speed (Ne) being a rotational speed of the internal combustion engine (ENG), and

not determine a state of the first engagement device (CL1) by the determining part (16) when the difference (ΔN) between the input rotational speed (Nm) and the internal combustion engine rotational speed (Ne) is less than or equal to the third threshold value (TH3).

Even when an engagement abnormality in the first engagement device (CL1) occurs, there is a low likelihood of sudden deceleration of the vehicle, except when the input rotational speed (Nm) is higher than the internal combustion engine rotational speed (Ne) and the difference (ΔN) between the input rotational speed (Nm) and the internal combustion engine rotational speed (Ne) is relatively large. According to this configuration, when the input rotational speed (Nm) is higher than the internal combustion engine rotational speed (Ne) and the difference (ΔN) between the input rotational speed (Nm) and the internal combustion engine rotational speed (Ne) is less than or equal to the third threshold value (TH3), a determination of a state of the first engagement device (CL1) is not made. By this, determining a state of the first engagement device (CL1) even for a case of a low likelihood of sudden deceleration of the vehicle does not occur, and thus, a computation load on the determining part (16) can be reduced.

INDUSTRIAL APPLICABILITY

A technique according to the present invention can be used in a control device whose control target is a vehicle drive device in which in a power transmission path connecting an input member drive-coupled to an internal combustion engine to an output member drive-coupled to wheels, an engagement device that operates by hydraulic pressure, a rotating electrical machine, and a transmission are provided in this order from an internal combustion engine side.

It is preferred that the control device (10) further include a communication part (11) that receives the engagement control instruction from an instruction device (30) by performing communication with the instruction device (30), the instruction device (30) outputting the engagement control instruction.

According to this configuration, the instruction device (30) that outputs an engagement control instruction is provided separately from the control device (10) including the communication part (11) that receives the engagement control instruction from the instruction device (30). By this, a load on the control device (10) can be reduced.

REFERENCE SIGNS LIST

1: Vehicle drive device, 10: Control device, 11: Communication part, 12: Rotating electrical machine control part, 13: Engagement control part, 14: Hydraulic pressure information obtaining part, 15: Acceleration information obtaining part, 16: Determining part, 30: Instruction device, ENG: Internal combustion engine, MG: Rotating electrical machine, I: Input shaft, O: Output shaft, TM: Transmission, CL1: First engagement device, CL2: Second engagement device, and W: Wheel

**Claims**

1. A control device (10) for a vehicle drive device (1), a control target for the control device (10) being the vehicle drive device (1) in which in a power transmission path connecting an input member (I) drive-coupled to an internal combustion engine (ENG) to an output member (O) drive-coupled to wheels (W), a first engagement device (CL1) that operates by hydraulic pressure, a rotating electrical machine (MG), and a transmission (TM) are provided in this order from an internal combustion engine (ENG) side, the control device (10) comprising:

   an engagement control part (13) that controls a state of engagement of the first engagement device (CL1) based on an engagement control instruction;
   a hydraulic pressure information obtaining part (14) that obtains hydraulic pressure information indicating first hydraulic pressure (P1) supplied to the first engagement device (CL1);
   an acceleration information obtaining part (15) that obtains acceleration information indicating acceleration (A) of a vehicle on which the vehicle drive device (1) is provided; and

a determining part (16) that determines a state of the first engagement device (CL1),
wherein when
an input rotational speed (Nm) is greater than zero and a state of the transmission (TM) is a drive transmission state in which drive power is transmitted, the input rotational speed (Nm) being a rotational speed of the rotating electrical machine (MG);
the engagement control instruction is a disengagement instruction to bring the first engagement device (CL1) into a disengaged state;
the first hydraulic pressure (P1) indicated by the hydraulic pressure information is greater than a first threshold value (TH1); and
acceleration (A) indicated by the acceleration information has a negative value smaller than a second threshold value (TH2),
the determining part (16) performs at least one of first control that brings the first engagement device (CL1) into a disengaged state and second control that interrupts transmission of drive power between the rotating electrical machine (MG) and the output member (O).

2. The control device (10) for a vehicle drive device (1) according to claim 1, wherein the first control includes first disengagement control that allows the engagement control part (13) to perform control again to bring the first engagement device (CL1) into a disengaged state.

3. The control device (10) for a vehicle drive device (1) according to claim 1 or 2, wherein the first control includes second disengagement control that allows a first engagement control valve (Va1) to operate such that the first engagement device (CL1) is forcefully brought into a disengaged state, the first engagement control valve (Va1) controlling the first hydraulic pressure (P1) supplied to the first engagement device (CL1).

4. The control device (10) for a vehicle drive device (1) according to any one of claims 1 to 3, wherein the first control includes third disengagement control that allows the engagement control part (13) to restart.

5. The control device (10) for a vehicle drive device (1) according to any one of claims 1 to 4, wherein the second control includes neutral control that brings the state of the transmission (TM) into a neutral state in which drive power is not transmitted.

6. The control device (10) for a vehicle drive device (1) according to claim 5, wherein

the transmission (TM) includes one or more second engagement devices (CL2) that are brought into an engaged state when a shift speed is formed, and
the neutral control includes forced neutral control that allows a second engagement control valve (Va2) to operate such that the second engagement devices (CL2) are forcefully brought into a disengaged state, the second engagement control valve (Va2) controlling second hydraulic pressure (P2) supplied to the second engagement devices (CL2).

7. The control device (10) for a vehicle drive device (1) according to any one of claims 1 to 6, further comprising a third engagement device (CL3) that connects or disconnects transmission of drive power between the rotating electrical machine (MG) and the transmission (TM),
wherein
the second control includes engagement disengagement control that brings the third engagement device (CL3) into a disengaged state.

8. The control device (10) for a vehicle drive device (1) according to claim 7, wherein the engagement disengagement control includes forced engagement disengagement control that allows a third engagement control valve (Va3) to operate such that the third engagement device (CL3) is forcefully brought into a disengaged state, the third engagement control valve (Va3) controlling third hydraulic pressure supplied to the third engagement device (CL3).

9. The control device (10) for a vehicle drive device (1) according to any one of claims 1 to 8, wherein the determining part (16) determines a state of the first engagement device (CL1) when the input rotational speed (Nm) is higher than an internal combustion engine rotational speed (Ne) and a difference ($\Delta$N) between the input rotational speed (Nm) and the internal combustion engine rotational speed (Ne) is greater than a third threshold value (TH3), the internal combustion engine rotational speed (Ne) being a rotational speed of the internal combustion engine (ENG), and does not determine a state of the first engagement device (CL1) when the difference ($\Delta$N) between the input

rotational speed (Nm) and the internal combustion engine rotational speed (Ne) is less than or equal to the third threshold value (TH3).

10. The control device (10) for a vehicle drive device (1) according to any one of claims 1 to 9, further comprising a communication part (11) that receives the engagement control instruction from an instruction device (30) by performing communication with the instruction device (30), the instruction device (30) outputting the engagement control instruction.

**Patentansprüche**

1. Steuerungseinrichtung (10) für eine Fahrzeugantriebseinrichtung (1), wobei ein Steuerungsziel für die Steuerungseinrichtung (10) die Fahrzeugantriebseinrichtung (1) ist, in der ein Leistungsübertragungspfad, der ein mit einer Brennkraftmaschine (ENG) antriebsgekoppeltes Eingangselement (I) mit einem mit Rädern (W) antriebsgekoppelten Ausgangselement (O) verbindet, eine erste Eingriffseinrichtung (CL1), die durch Hydraulikdruck arbeitet, eine rotierende elektrische Maschine (MG) und ein Getriebe (TM) in dieser Reihenfolge von einer Seite der Brennkraftmaschine (ENG) aus bereitgestellt sind, wobei die Steuerungseinrichtung (10) aufweist:

einen Eingriffssteuerungsteil (13), der einen Zustand eines Eingriffs der ersten Eingriffseinrichtung (CL1) basierend auf einer Eingriffssteuerungsanweisung steuert;
einen Hydraulikdruckinformationserhaltungteil (14), der Hydraulikdruckinformationen, die einen ersten Hydraulikdruck (P1), der an die erste Eingriffseinrichtung (CL1) zugeführt wird, angeben, erhält;
einen Beschleunigungsinformationserhaltungteil (15), der Beschleunigungsinformationen, die eine Beschleunigung (A) des Fahrzeugs, an dem die Fahrzeugantriebseinrichtung (1) bereitgestellt ist, angeben, erhält; und
einen Bestimmungsteil (16), der einen Zustand der ersten Eingriffseinrichtung (CL1) bestimmt,
wobei, wenn
eine Eingangsdrehzahl (Nm) größer als null ist und ein Zustand des Getriebes (TM) ein Antriebsübertragungszustand ist, in dem eine Antriebsleistung übertragen wird, die Eingangsdrehzahl (Nm) eine Drehzahl der rotierenden elektrischen Maschine (MG) ist;
die Eingriffssteuerungsanweisung eine Trennungsanweisung ist, um die erste Eingriffseinrichtung (CL1) in einen getrennten Zustand zu bringen;
der erste Hydraulikdruck (P1), der durch die Hydraulikdruckinformationen angegeben ist, größer als ein erster Schwellenwert (TH1) ist; und
eine Beschleunigung (A), die durch die Beschleunigungsinformationen angegeben ist, einen negativen Wert aufweist, der kleiner als ein zweiter Schwellenwert (TH2) ist,
der Bestimmungsteil (16) zumindest eine erste Steuerung, die die erste Eingriffseinrichtung (CL1) in einen getrennten Zustand bringt, und eine zweite Steuerung, die die Übertragung der Antriebsleistung zwischen der rotierenden elektrischen Maschine (MG) und dem Ausgangselement (O) unterbricht, durchführt.

2. Steuerungseinrichtung (10) für eine Fahrzeugantriebseinrichtung (1) gemäß Anspruch 1, wobei die erste Steuerung eine erste Trennungssteuerung umfasst, die dem Eingriffssteuerungsteil (13) ermöglicht, wiederholt eine Steuerung durchzuführen, um die erste Eingriffseinrichtung (CL1) in einen getrennten Zustand zu bringen.

3. Steuerungseinrichtung (10) für eine Fahrzeugantriebseinrichtung (1) gemäß Anspruch 1 oder 2, wobei die erste Steuerung eine zweite Trennungssteuerung umfasst, die einem ersten Eingriffssteuerungsventil (Va1) ermöglicht, zu arbeiten, sodass die erste Eingriffseinrichtung (CL1) zwangsweise in einen getrennten Zustand gebracht wird, wobei das erste Eingriffsteuerungsventil (Va1) den ersten Hydraulikdruck (P1), der an die erste Eingriffseinrichtung (CL1) zugeführt wird, steuert.

4. Steuerungseinrichtung (10) für eine Fahrzeugantriebseinrichtung (1) gemäß einem der Ansprüche 1 bis 3, wobei die erste Steuerung eine dritte Trennungssteuerung umfasst, die dem Eingriffsteuerungsteil (13) ermöglicht, erneut zu starten.

5. Steuerungseinrichtung (10) für eine Fahrzeugantriebseinrichtung (1) gemäß einem der Ansprüche 1 bis 4, wobei die zweite Steuerung eine neutrale Steuerung umfasst, die den Zustand des Getriebes (TM) in einen neutralen Zustand bringt, in dem eine Antriebsleistung nicht übertragen wird.

6. Steuerungseinrichtung (10) für eine Fahrzeugantriebseinrichtung (1) gemäß Anspruch 5, wobei

das Getriebe (TM) eine oder mehrere zweite Eingriffseinrichtungen (CL2) umfasst, die in einen eingegriffenen Zustand gebracht werden, wenn eine Schaltdrehzahl gebildet wird, und

die neutrale Steuerung eine erzwungene neutrale Steuerung umfasst, die einem zweiten Eingriffsteuerungsventil (Va2) ermöglicht, zu arbeiten, sodass die zweiten Eingriffseinrichtungen (CL2) zwangsweise in einen getrennten Zustand gebracht werden, wobei das zweite Eingriffsteuerungsventil (Va2) den zweiten Hydraulikdruck (P2), der an die zweite Eingriffseinrichtungen (CL2) zugeführt wird, steuert.

7. Steuerungseinrichtung (10) für eine Fahrzeugantriebseinrichtung (1) gemäß einem der Ansprüche 1 bis 6, weiterhin mit einer dritten Eingriffseinrichtung (CL3), die eine Übertragung der Antriebsleistung zwischen der rotierenden elektrischen Maschine (MG) und dem Getriebe (TM) verbindet oder trennt,
wobei
die zweite Steuerung eine Eingriffstrennungssteuerung umfasst, die die dritte Eingriffseinrichtung (CL3) in einen getrennten Zustand bringt.

8. Steuerungseinrichtung (10) für eine Fahrzeugantriebseinrichtung (1) gemäß Anspruch 7, wobei die Eingriffstrennungssteuerung eine erzwungene Eingriffstrennungsteuerung umfasst, die einem dritten Eingriffsteuerungsventil (Va3) ermöglicht, zu arbeiten, sodass die dritte Eingriffseinrichtung (CL3) zwangsweise in einen getrennten Zustand gebracht wird, wobei das dritte Eingriffsteuerungsventil (Va3) einen dritten Hydraulikdruck, der an die dritte Eingriffseinrichtung (CL3) zugeführt wird, steuert.

9. Steuerungseinrichtung (10) für eine Fahrzeugantriebseinrichtung (1) gemäß einem der Ansprüche 1 bis 8, wobei der Bestimmungsteil (16) einen Zustand der ersten Eingriffseinrichtung (CL1) bestimmt, wenn die Eingangsdrehzahl (Nm) höher als eine Brennkraftmaschinendrehzahl (Ne) ist, und eine Differenz ($\Delta$N) zwischen der Eingangsdrehzahl (Nm) und der Brennkraftmaschinendrehzahl (Ne) größer als ein dritter Schwellenwert (TH3) ist, wobei die Brennkraftmaschinendrehzahl (Ne) eine Drehzahl der Brennkraftmaschine (ENG) ist, und
einen Zustand der Eingriffseinrichtung (CL1) nicht bestimmt, wenn die Differenz ($\Delta$N) zwischen der Eingangsdrehzahl (Nm) und der Brennkraftmaschinendrehzahl (Ne) kleiner oder gleich dem dritten Schwellenwert (TH3) ist.

10. Steuerungseinrichtung (10) für eine Fahrzeugantriebseinrichtung (1) gemäß einem der Ansprüche 1 bis 9, weiterhin mit einem Kommunikationsteil (11), der die Eingriffssteuerungsanweisung von einer Anweisungseinrichtung (30) durch Durchführen einer Kommunikation mit der Anweisungseinrichtung (30) empfängt, wobei die Anweisungseinrichtung (30) die Eingriffsteuerungsanweisung ausgibt.

**Revendications**

1. Dispositif de commande (10) pour un dispositif d'entraînement de véhicule (1), une cible de commande pour le dispositif de commande (10) étant le dispositif d'entraînement de véhicule (1) dans lequel, dans un chemin de transmission de puissance reliant un organe d'entrée (I) couplé en entraînement à un moteur à combustion interne (ENG) à un organe de sortie (O) couplé en entraînement à des roues (W), un premier dispositif de mise en prise (CL1) qui fonctionne par pression hydraulique, une machine électrique rotative (MG), et une transmission (TM) sont ménagés dans cet ordre à partir d'un côté moteur à combustion interne (ENG), le dispositif de commande (10) comprenant :

une partie de commande de mise en prise (13) qui commande un état de mise en prise du premier dispositif de mise en prise (CL1) sur la base d'une instruction de commande de mise en prise ;
une partie d'obtention d'informations de pression hydraulique (14) qui obtient des informations de pression hydraulique indiquant une première pression hydraulique (P1) apportée au premier dispositif de mise en prise (CL1) ;
une partie d'obtention d'informations d'accélération (15) qui obtient des informations d'accélération indiquant l'accélération (A) d'un véhicule sur lequel le dispositif d'entraînement de véhicule (1) est ménagé ; et
une partie de détermination (16) qui détermine un état du premier dispositif de mise en prise (CL1),
dans lequel
lorsqu'une vitesse de rotation d'entrée (Nm) est supérieure à zéro et un état de la transmission (TM) est un état de transmission d'entraînement dans lequel une puissance d'entraînement est transmise, la vitesse de rotation d'entrée (Nm) étant une vitesse de rotation de la machine électrique rotative (MG) ;
l'instruction de commande de mise en prise est une instruction de désolidarisation pour amener le premier dispositif de mise en prise (CL1) dans un état désolidarisé ;

la première pression hydraulique (P1) indiquée par les informations de pression hydraulique est supérieure à une première valeur seuil (TH1) ; et

une accélération (A) indiquée par les informations d'accélération possède une valeur négative inférieure à une deuxième valeur seuil (TH2),

la partie de détermination (16) réalise au moins l'une parmi une première commande qui amène le premier dispositif de mise en prise (CL1) dans un état désolidarisé et une seconde commande qui interrompt la transmission de puissance d'entraînement entre la machine électrique rotative (MG) et l'organe de sortie (O).

2. Dispositif de commande (10) pour un dispositif d'entraînement de véhicule (1) selon la revendication 1, dans lequel la première commande inclut une première commande de désolidarisation qui permet à la partie de commande de mise en prise (13) de réaliser une commande à nouveau pour amener le premier dispositif de mise en prise (CL1) dans un état désolidarisé.

3. Dispositif de commande (10) pour un dispositif d'entraînement de véhicule (1) selon la revendication 1 ou 2, dans lequel la première commande inclut une deuxième commande de désolidarisation qui permet à une première vanne de commande de mise en prise (Va1) d'être actionnée de sorte que le premier dispositif de mise en prise (CL1) soit amené de force dans un état désolidarisé, la première vanne de commande de mise en prise (Va1) commandant la première pression hydraulique (P1) apportée au premier dispositif de mise en prise (CL1).

4. Dispositif de commande (10) pour un dispositif d'entraînement de véhicule (1) selon l'une quelconque des revendications 1 à 3, dans lequel la première commande inclut une troisième commande de désolidarisation qui permet à la partie de commande de mise en prise (13) de redémarrer.

5. Dispositif de commande (10) pour un dispositif d'entraînement de véhicule (1) selon l'une quelconque des revendications 1 à 4, dans lequel la seconde commande inclut une commande de point mort qui amène l'état de la transmission (TM) dans un état de point mort dans lequel une puissance d'entraînement n'est pas transmise.

6. Dispositif de commande (10) pour un dispositif d'entraînement de véhicule (1) selon la revendication 5, dans lequel

la transmission (TM) inclut un ou plusieurs deuxièmes dispositifs de mise en prise (CL2) qui sont amenés dans un état mis en prise lorsqu'une vitesse de passage de rapport est formée, et

la commande de point mort inclut une commande de point mort forcée qui permet à une deuxième vanne de commande de mise en prise (Va2) d'être actionnée de sorte que les deuxièmes dispositifs de mise en prise (CL2) soient amenés de force dans un état désolidarisé, la deuxième vanne de commande de mise en prise (Va2) commandant une deuxième pression hydraulique (P2) apportée aux deuxièmes dispositifs de mise en prise (CL2).

7. Dispositif de commande (10) pour un dispositif d'entraînement de véhicule (1) selon l'une quelconque des revendications 1 à 6, comprenant en outre un troisième dispositif de mise en prise (CL3) qui connecte ou déconnecte une transmission de puissance d'entraînement entre la machine électrique rotative (MG) et la transmission (TM), dans lequel

la seconde commande inclut une commande de désolidarisation de mise en prise qui amène le troisième dispositif de mise en prise (CL3) dans un état désolidarisé.

8. Dispositif de commande (10) pour un dispositif d'entraînement de véhicule (1) selon la revendication 7, dans lequel la commande de désolidarisation de mise en prise inclut une commande de désolidarisation de mise en prise forcée qui permet à une troisième vanne de commande de mise en prise (Va3) d'être actionnée de sorte que le troisième dispositif de mise en prise (CL3) soit amené de force dans un état désolidarisé, la troisième vanne de commande de mise en prise (Va3) commandant une troisième pression hydraulique apportée au troisième dispositif de mise en prise (CL3).

9. Dispositif de commande (10) pour un dispositif d'entraînement de véhicule (1) selon l'une quelconque des revendications 1 à 8, dans lequel la partie de détermination (16)

détermine un état du premier dispositif de mise en prise (CL1) lorsque la vitesse de rotation d'entrée (Nm) est supérieure à une vitesse de rotation de moteur à combustion interne (Ne) et une différence ($\Delta$N) entre la vitesse de rotation d'entrée (Nm) et la vitesse de rotation de moteur à combustion interne (Ne) est supérieure à une troisième valeur seuil (TH3), la vitesse de rotation de moteur à combustion interne (Ne) étant une vitesse de rotation du moteur à combustion interne (ENG), et

ne détermine pas un état du premier dispositif de mise en prise (CL1) lorsque la différence (ΔN) entre la vitesse de rotation d'entrée (Nm) et la vitesse de rotation de moteur à combustion interne (Ne) est inférieure ou égale à la troisième valeur seuil (TH3).

10. Dispositif de commande (10) pour un dispositif d'entraînement de véhicule (1) selon l'une quelconque des revendications 1 à 9, comprenant en outre une partie de communication (11) qui reçoit l'instruction de commande de mise en prise provenant d'un dispositif d'instruction (30) par la réalisation d'une communication avec le dispositif d'instruction (30), le dispositif d'instruction (30) délivrant en sortie l'instruction de commande de mise en prise.

FIG. 1

FIG. 2

Instruction device — 30

Communication part — 11

Input rotational speed sensor — Se1

Rotating electrical machine control part — 12

Engagement control part — 13
Normal control part — 131
Forced control part — 132

First hydraulic pressure sensor — Se2
Second hydraulic pressure sensor — Se3

Hydraulic pressure information obtaining part — 14

Output rotational speed sensor — Se4

Acceleration information obtaining part — 15

Determining part — 16

10

Internal combustion engine control device — 20

Internal combustion engine rotational speed sensor — Se5

Internal combustion engine — ENG

Rotating electrical machine — MG

First engagement control valve — Va1

Second engagement control valve — Va2

## FIG. 3

```
START
  │
STEP1
  ╱╲
 ╱Forward shift╲──N──┐
 ╲  speed?     ╱     │
  ╲╱                 │
  │Y                 │
STEP2               │
  ╱╲                │
 ╱ Nm>0 ╲──N────────┤
 ╲   ?  ╱           │
  ╲╱                │
  │Y                │
STEP3              │
  ╱╲               │
 ╱Nm-Ne>TH3╲──Y──┐ │
 ╲    ?    ╱     │ │
  ╲╱             │ │
  │N        STEP4│ │
  │   Obtain engagement control│
  │        instruction         │
  │         STEP5              │
  │   Obtain first hydraulic   │
  │        pressure P1         │
  │            │               │
  │         STEP6             │
  │          ╱╲              │
  │  ╱ Engagement      ╲     │
  │ ╱ control instruction:╲──Y──┐
  │ ╲ disengagement instruction ╱
  │  ╲   AND              ╱     │
  │   ╲  P1>TH1         ╱      │
  │     ╲  ?  ╱              │
  │       │N          STEP7  │
  │       │     Obtain acceleration A of vehicle
  │       │          STEP8   │
  │       │           ╱╲     │
  │       │    ╱ A<TH2 ╲──N──┤
  │       │    ╲   ?   ╱     │
  │       │     ╲╱           │
  │       │     │Y           │
  │       │   STEP9         │
  │       │  Tentative determination of
  │       │  engagement abnormality
  │       │     STEP10      │
  │       │      ╱╲         │
  │       │  ╱ Has period of time ╲──N──┤
  │       │  ╲  Δt elapsed?  ╱          │
  │       │     │Y                      │
  │       │   STEP11                   │
  │       │  Final determination of    │
  │       │  engagement abnormality    │
  │       │     │                      │
  │       │   ┌─┴─┐                    │
  │       │ STEP12   STEP13            │
  │       │ First control  Second control
  │       │
 END
```

## FIG. 4

HV mode | Transition mode | EV mode

Forward shift speed | Neutral

First hydraulic pressure P1

TH1

0

Hydraulic pressure instruction for CL1

0

Nm

Rotational speed

ΔN

Ne

0

Acceleration of vehicle

0

TH2

Δt

t1    t2    t3    t4

EP 3 800 098 B1

FIG. 5

**EP 3 800 098 B1**

**REFERENCES CITED IN THE DESCRIPTION**

**Patent documents cited in the description**

- WO 2016084474 A
- US 2018093660 A1
- US 2018111605 A1